# EUROPEAN PATENT APPLICATION

(11) **EP 2 672 717 A1**
(43) Date of publication of application: **11.12.2013**
(21) Application number: 13165214.1
(22) Date of filing: 24.04.2013
(51) Int. Cl.: H04N 13/04

(54) **Multi-view display apparatus and mode selection method thereof**

(30) Priority: 08.06.2012 KR 20120061545
(71) Applicant: Samsung Electronics Co., Ltd, Gyeonggi-do 443-742 (KR)
(72) Inventor: Lee, Seung-bok, Gyeonggi-do (KR)
(74) Representative: Instone, Terry

(57) **Abstract**

A display apparatus includes: an image receiver which receives an image signal of at least one channel; an image processor which processes the received image signal; a display which displays an image thereon based on the processed image signal; a communication unit which communicates with at least one multi-view device which is synchronized with the displayed image; and a controller which controls the display to display thereon a user interface (UI) for selecting a channel and a display mode corresponding to the at least one multi-view device and controls the image processor to display an image based on the selected channel and display mode if a command regarding the selection of the channel and display mode through the UI is input.

## Description

### BACKGROUND

### Field

Apparatuses and methods consistent with the exemplary embodiments relate to a display apparatus and a mode selection method thereof, and more particularly, to a display apparatus and a mode selection method thereof which enables a plurality of users to view a screen displayed by the display apparatus through a plurality of multi-view devices which operate in sync with the display apparatus.

### Description of the Related Art

A television (TV) tunes an image signal corresponding to a channel selected by a user, receives the image signal from an external image supply source, processes the image signal, and displays an image corresponding to the image signal on a display panel. The image displayed on the display panel is recognized to be identical by all users. Thus, other than dividing and displaying images on the screen in picture in picture (PIP), it was impossible for a plurality of users to view different channels in a single TV.

A three-dimensional (3D) TV which displays a 3D image has been widely used with the development of video technology, and 3D glasses, which is the most general 3D video technology, utilize binocular disparity which refers to the difference in image location of an object seen by a user's eyes resulting from the eyes' horizontal separation. Shutter glasses, as a representative example of 3D glasses, open and close left and right eye lenses in sync with left and right eye images displayed on a screen, and transmit and block light through the opening and closing operations so that a user recognizes the left eye image and right eye image with his/her left and right eyes, respectively.

If the principle of the 3D shutter glasses is extended, images of different channels are alternately displayed on the TV screen and lenses of the 3D shutter glasses worn by a plurality of users are opened and closed in sync with such images to thereby implement a multi-view function through which the plurality of users may watch images of different channels in a single screen.

If a plurality of users view different images through the multi-view function, a user interface may be required to efficiently control images for respective users in a single TV.

### SUMMARY

According to the present invention there is provided an apparatus and method as set forth in the appended claims. Other features of the invention will be apparent from the dependent claims, and the description which follows.

One or more exemplary embodiments provide a user interface for efficiently controlling images corresponding to respective users if a multi-view function is performed by a display apparatus.

According to an aspect of an exemplary embodiment, there is provided a display apparatus including: an image receiver which receives an image signal of at least one channel; an image processor which processes the received image signal, a display which displays an image thereon based on the processed image signal; a communication unit which communicates with at least one multi-view device which is synchronized c with the displayed image; and a controller which controls the display to display thereon a user interface (UI) for selecting a channel and a display mode corresponding to the at least one multi-view device and controls the image processor to display an image based on the selected channel and display mode if a command regarding the selection of the channel and display mode through the UI is input.

Also, the display mode may include at least one of a two-dimensional (2D) display mode and a three-dimensional (3D) display mode.

Also, the display apparatus may further include a user input unit which includes a plurality of buttons to select the UI, and through which the command is input.

Also, if one of the multi-view devices is selected through the user input unit, the controller may control to manipulate a screen corresponding to the selected multi-view device based on a command input through the user input unit.

Also, the user input unit may include a button to select one of the multi-view devices, and the controller may control the display to display thereon information regarding the selection of the at least one multi-view device.

Also, the multi-view device may include a user input unit through which a command is input, and upon receiving the command from the user input unit of the multi-view device, the controller may manipulate a screen corresponding to the multi-view device which transmitted the command.

Also, if a multi-view function is set, the controller may search for, and display on the display, multi-view devices which pair with the display apparatus, and control the display to display thereon the UI to select the channel and the display mode of the at least one multi-view device selected from the searched multi-view devices.

Also, the at least one multi-view device may include a left eye shutter lens and a right eye shutter lens, and the controller may transmit a sync signal to the at least one multi-view device through the communication unit to synchronize a screen displayed which corresponds to the selected channel and the selected display mode selected through the UI, and opening and closing operations of the left and right eye shutter lenses of the multi-view device, and the multi-view device may open and close the left and right eye shutter lenses based on the sync signal.

According to an aspect of another exemplary embodiment, there is provided a mode selection method of a display apparatus which comprises a display to display an image and a UI and communicates with at least one multi-view device which is synchronized with the image, the method comprising receiving a command to set a multi-view function; displaying a UI for selecting a channel and a display mode corresponding to the at least one multi-view device; receiving a command regarding the selection of the channel and display mode through the UI; and displaying on the display an image based on the channel and display mode selected through the UI.

Also, the receiving the command regarding the selection of the channel and the selection of the display mode from the user input unit may include receiving a command regarding a selection of one of the multi-view devices, and the method may further include manipulating a screen corresponding to the selected multi-view device based on the command regarding the selection of one of the multi-view devices.

Also, the user input unit may include at least one button to select one of the multi-view devices, and the method may further include displaying information regarding the selection of the at least one multi-view device.

Also, the multi-view device may include a user input unit through which a command is input, and the method may further include receiving the command from the user input unit of the multi-view device; and manipulating a screen corresponding to the multi-view device which transmitted the command.

Also, the method may further include searching for, and displaying multi-view devices which pair with the display apparatus, and the displaying the UI may include displaying the UI for selecting the channel and the display mode of the at least one multi-view device selected by a user from the searched multi-view devices.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 illustrates a display apparatus and a multi-view device according to an exemplary embodiment;
FIG. 2 is a control block diagram of the display apparatus according to an exemplary embodiment;
FIGS. 3 to 5 illustrate an example of a user interface (UI) according to an exemplary embodiment;
FIGS. 6 to 8 illustrate an example of a user input unit according to an exemplary embodiment; and
FIGS. 9 and 10 are flowcharts of a mode selection method of the display apparatus according to an exemplary embodiment.

### DETAILED DESCRIPTION OF EXEMPLARY EMBODIMENTS

Hereinafter, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

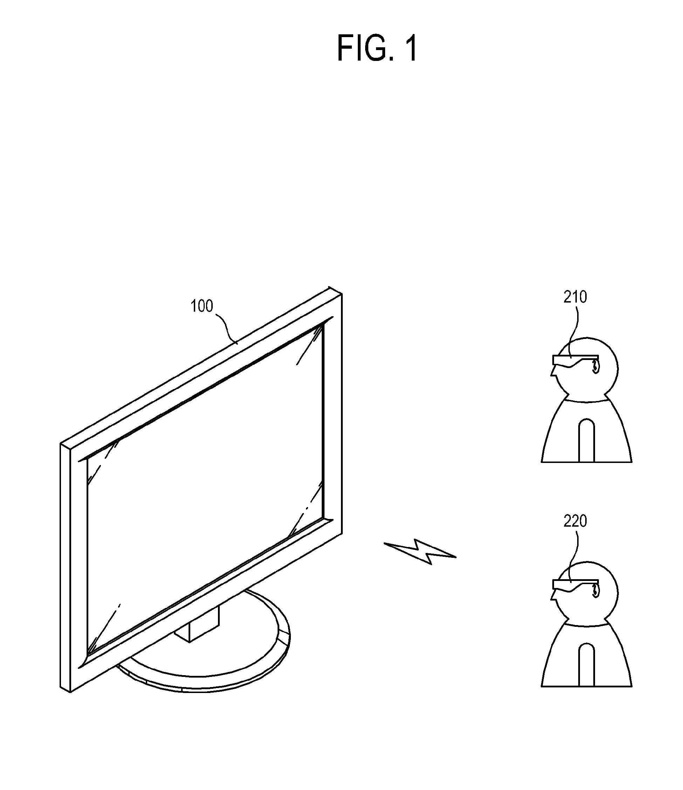

FIG. 1 illustrates a display apparatus 100 and a multi-view device according to an exemplary embodiment.

The display apparatus 100 processes and displays an image signal which is supplied by an external image supply source (not shown) or image data stored within or outside the display apparatus 100, and may be implemented as a digital television (DTV). However, the display apparatus is not limited thereto.

Multi-view devices 210 and 220 may be implemented as 3D shutter glasses which selectively transmit light by opening and closing left and right eye lenses in sync with a screen displayed in the display apparatus 100. Users may wear the multi-view devices 210 and 220 and view the screen displayed in the display apparatus 100. In FIG. 1 and the description below, users include two persons as an example, but there will be no difficulty in implementing the exemplary embodiment even if there are three or more users.

The display apparatus 100 may display a 3D image and a multi-view image as well as a two-dimensional (2D) image. That is, in the case of a 3D image, the display apparatus 100 may alternately display a left eye image and a right eye image, and in the case of a multi-view image, it may alternately display a first image and a second image to be recognized by different users. If a multi-view image is displayed, the display apparatus 100 transmits a sync signal to synchronize the multi-view images and the multi-view devices 210 and 220. According to the sync signal, the first multi-view device 210 opens and closes lenses to transmit light at the time when the first image is displayed, and to block light at the time when the second image displayed. The second multi-view device 200 opens and closes lenses to transmit light at the time when the second image is displayed and to block light at the time when the first image is displayed. Thus, while the first and second images, i.e., the multi-view images are alternately displayed on the screen of the display apparatus 100, users of the first and second multi-view devices 210 and 220 recognize only the first image and the second image, respectively, and thus view different images at the same time.

The display apparatus 100 according to the exemplary embodiment may extend the multi-view function for users of the first and second multi-view devices 210 and 220 to view different 3D images. In this case, multi-view images displayed in the display apparatus 100 are alternately displayed in the order of a first left eye image, a second left eye image, a first right eye image and a second right eye image. In sync with the images, a left eye lens of the first multi-view device 210, a left eye lens of the second multi-view device 220, a right eye lens of the first multi-view device 210 and a right eye lens of the second multi-view device 220 may sequentially transmit light. The example of implementing a 3D multi-view image includes only one exemplary embodiment, and the displayed images and the order of opening and closing lenses of the multi-view devices 210 and 220 in sync with the displayed images may vary and does not cause any disturbance in applying the exemplary embodiment as long as a plurality of users may view different 3D images.

As explained above, if a plurality of users wear the multi-view devices 210 and 220 to view multi-view images, they are required to select a desired channel and a display mode such as 2D or 3D image display mode. Hereinafter, the present exemplary embodiment will be described, centering on the implementation of a user interface (UI) for selecting the channel and the display mode.

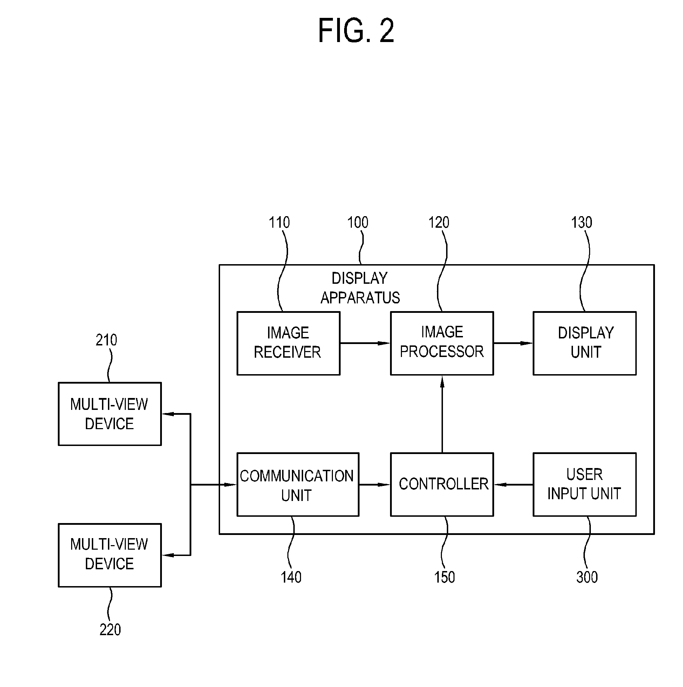

FIG. 2 is a control block diagram of the display apparatus 100 according to the present exemplary embodiment.

As shown therein, the display apparatus 100 may include an image receiver 110, an image processor 120, a display 130, a communication unit 140 and a controller 150, and may further include a user input unit 300 as necessary.

The image receiver 110 receives an image signal of at least one channel. The image receiver 110 may vary depending on a standard of a received image signal, and the implementation type of the display apparatus 900. For example, the image receiver 110 may be implemented as a tuner to receive a radio frequency (RF) broadcasting signal from a broadcasting station. As the display apparatus 100 according to the present exemplary embodiment may display images of a plurality of channels upon execution of the multi-view function, the image receiver 110 may be implemented as a multi tuner to simultaneously receive image signals corresponding to a plurality of channels.

The image processor 120 processes the received image signal according to a preset image processing operation. The image processing operation of the image processor 120 may include a decoding operation, a de-interlacing operation, a scaling operation, a noise reduction operation, a detail enhancement operation, etc., but not limited thereto. The image processor 120 may be implemented as a system-on-chip (SOC) integrating the foregoing functions or as an image processing board (not shown) in which individual elements performing the foregoing operations independently are mounted in the display apparatus 100.

The display 130 displays thereon an image based on the image signal processed by the image processor 120 and a user interface (UI) generated by the controller 150 (to be described later). The display 130 may be implemented as various display panels such as a plasma display panel (PDP), a liquid crystal display (LCD), an organic light emitting diode (OLED), and a flexible display, but is not limited thereto.

The communication unit 140 communicates with the multi-view devices 210 and 220. As explained above, the multi-view devices 210 and 220 operate in sync with the image displayed on the display 130, and the communication unit 140 transmits to the multi-view devices 210 and 220 a sync signal to synchronize the multi-view images displayed on the display 130 and the operations of opening and closing the lenses of the multi-view devices 210 and 220. The communication unit 140 may communicate with the multi-view devices 210 and 220, respectively, through known standard or non-standard wireless communication methods. As a representative wireless communication method, the communication unit 140 may use Bluetooth to pair with the multi-view devices 210 and 220 and exchange various data including a sync signal, with the multi-view devices 210 and 220.

The controller 150 controls the overall operations of the display apparatus 100. The controller 150 may include a non-volatile memory to store a control program therein, a volatile memory to load the stored control program, and a microprocessor such as a central processing unit (CPU) and a micro control unit (MCU) to execute the loaded control program.

Upon execution of the multi-view function by a user, the controller 150 generates a UI for selecting a channel and a display mode corresponding to at least one of the multi-view devices 210 and 220 connected through the communication unit 140, and displays the UI on the display 130. If the multi-view image is displayed on the display 130, users view the same screen even though they recognize images of different channels with the multi-view devices 210 and 220. Thus, it would be preferable for users to manipulate the channel setting, the display mode setting and other screen settings corresponding to the multi-view devices 210 and 220 through a single UI. Thus, the UI may be provided to sequentially select the multi-view devices 210 and 220, a channel to be displayed by the selected multi-view devices 210 and 220 and a 2D or 3D display mode of the selected channel.

If the multi-view devices 210 and 220 communicate with the communication unit 140 through Bluetooth technology, upon setting of the multi-view function, the controller 150 searches and displays on the display 130 the multi-view devices which pair with the display apparatus 100. If a user selects a particular multi-view device from the searched multi-view devices, the controller 150 displays the multi-view through the selected multi-view device, and displays a UI for selecting a channel and a display mode corresponding to the selected multi-view device.

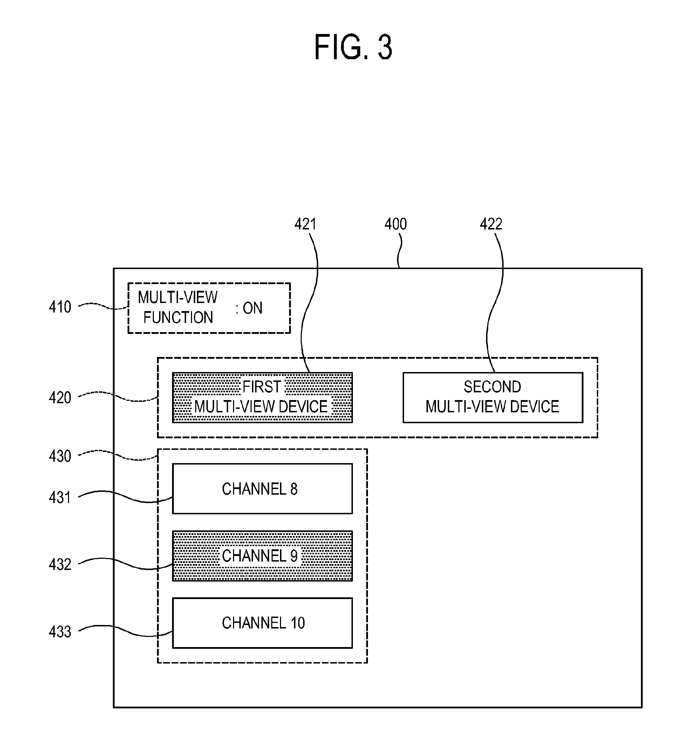

The controller 150 forms the UI as a separate layer from the displayed multi-view image, and displays the UI in a front surface of the multi-view image. The displayed UI is identically recognized by a plurality of users. The detailed type of the displayed UI will be described later with reference to FIGS. 3 to 5.

If a user selects the displayed channel and display mode through the user input unit 300 (to be described later), the controller 150 controls the image processor 120 to display an image based on the channel and display mode selected by a user. For example, if two users view multi-views through their respective multi-view devices 210 and 220 and select channel numbers 8 and 9 and 2D and 3D display modes, respectively, a single image of the channel number 8 and a left eye image and a right eye image of the channel number 9 are alternately displayed on the display 130. The controller 150 transmits a sync signal to the multi-view devices 210 and 220 through the communication unit 140 to synchronize the displayed screen and the opening and closing operations of the left and right shutter lenses of the multi-view devices 210 and 220, and the multi-view devices 210 and 220 open and close the left and right eye shutter lenses based on the received sync signal. Accordingly, each of users may view the images through the multi-view devices 210 and 220 according to the channel and display mode selected through the UI.

The display apparatus 100 according to the present exemplary embodiment may further include the user input unit 300 to receive a user's command. The user input unit 300 may be provided as a remote control device, separately from the display apparatus 100 or in an external surface of the display apparatus 100.

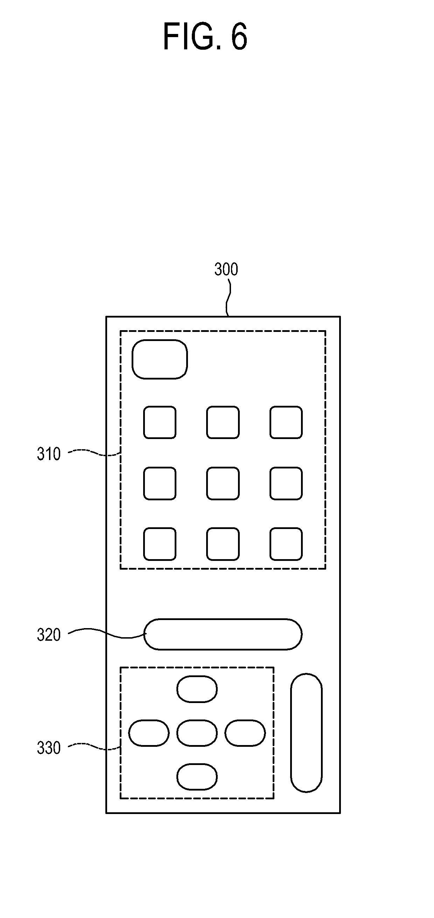

Even if the multi-view function is executed, employing a plurality of user input units 300 for the purpose of manipulating a single display apparatus 100 is not efficient from the perspective of costs and usage. Thus, the user input unit 300 of the display apparatus 100 providing the multi-view function may be provided to manipulate an image corresponding to particular multi-view devices 210 and 220. The detailed type of the user input unit 300 will be described later with reference to FIGS. 6 to 8.

FIGS. 3 to 5 illustrate an example of a UI 400 according to an exemplary embodiment. In FIGS. 3 to 5, two users wear the first multi-view device 210 and the second multi-view device 220, respectively, to view multi-views.

As shown therein, upon execution of the multi-view function, the multi-view function is displayed on an upper part of the screen (410). A sub UI 420 is displayed for users to select multi-view devices for which the channel and display mode are set. Windows 421 and 422 which are provided to select the first multi-view device 210 and the second multi-view device 220 may display a personal identification number (PIN) code or device name. As shown therein, if a user selects the first multi-view device window 421, the first multi-view device 210 is highlighted and displayed, and a sub UI 430 is displayed for a user to set the channel and display mode of the first multi-view device 210. That is, if a user selects one of the first multi-view device 210 and the second multi-view device 220, a screen is displayed corresponding to the multi-view device which has been selected on the basis of a control command including the channel and mode selection through the user input unit 300.

If the first multi-view device 210 is selected (421), the sub UI 430 is displayed for a user to select a channel that he/she wishes to view through the first multi-view device 210. For example, if the channel prior to the execution of the multi-view function or the channel which is currently viewed through the first multi-view device 210 is a channel number 9 (432), channel number 8 (431) and channel number 10 (433) which are previous/subsequent channels of the channel number 9 may be displayed altogether, and such channels may be changed by a user's selection. The window which corresponds to the channel number may display the screen or program information of the concerned channel.

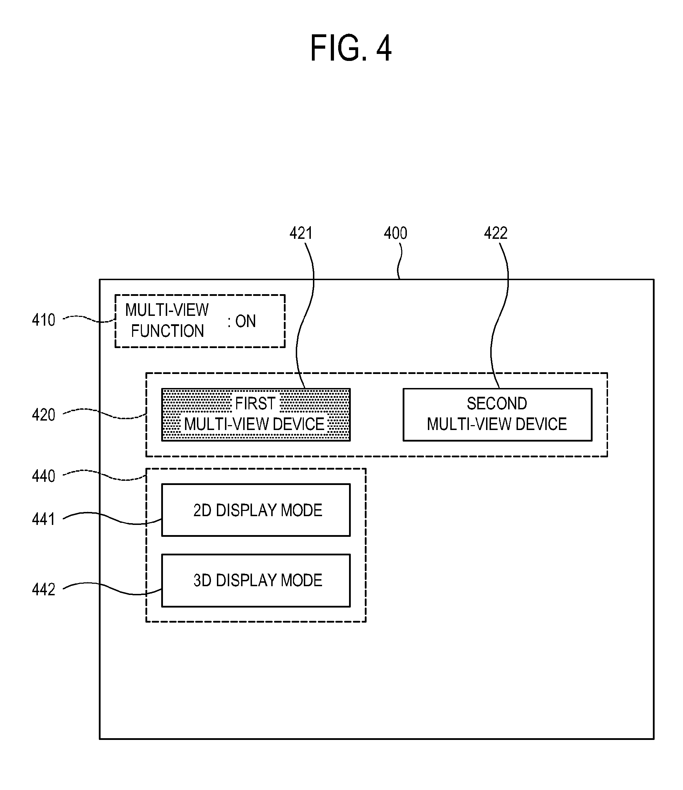

If a channel which will be viewed through the first multi-view device 210 is selected, a sub UI 440 is displayed to set the display mode as shown in FIG. 4. The display mode may include a 2D display mode 441 and a 3D display mode 442. If a user may view only the 2D image through the concerned channel, only the available 2D display mode may be displayed on the sub UI 440.

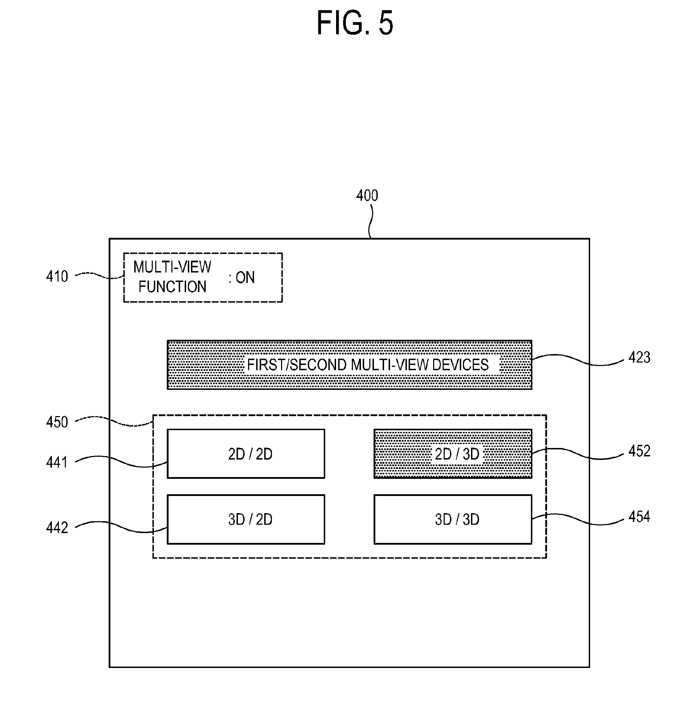

Unlike in FIG. 4, if all channels which will be viewed through the first and second multi-view devices 210 and 220 are selected, a sub UI 450 may be displayed to enable a user to simultaneously select respective display modes as shown in FIG. 5.

If the selection of the channel and the display mode of the first and second multi-view devices 210 and 220 is completed, the controller 150 controls the image processor 120 to display an image based on the selected channel and display mode, and transmits a sync signal to the first and second multi-view devices 210 and 220 through the communication unit 140. Thus, users may view different screens through the multi-view function.

FIGS. 6 to 8 illustrate an example of the user input unit 300 according to an exemplary embodiment.

The user input unit 300 may include a typical remote control device, and may further include a button for executing the multi-view function and a button for selecting the multi-view device. The user input unit 300 may be implemented as known types such as a touch pad unlike those shown in the drawings.

The user input unit 300 may include a plurality of buttons to select a UI displayed on the display 130. As shown in FIG. 6, the user input unit 300 may include a button 320 for executing the multi-view function, and a button 330 for selecting the multi-view device, channels and display modes. For example, of the buttons 330, left and right buttons may be used to select one of the first multi-view device 210 and the second multi-view device 220 from the UI 400 shown in FIG. 3, and top and bottom buttons may be used to change a channel or select one of 2D/3D display modes.

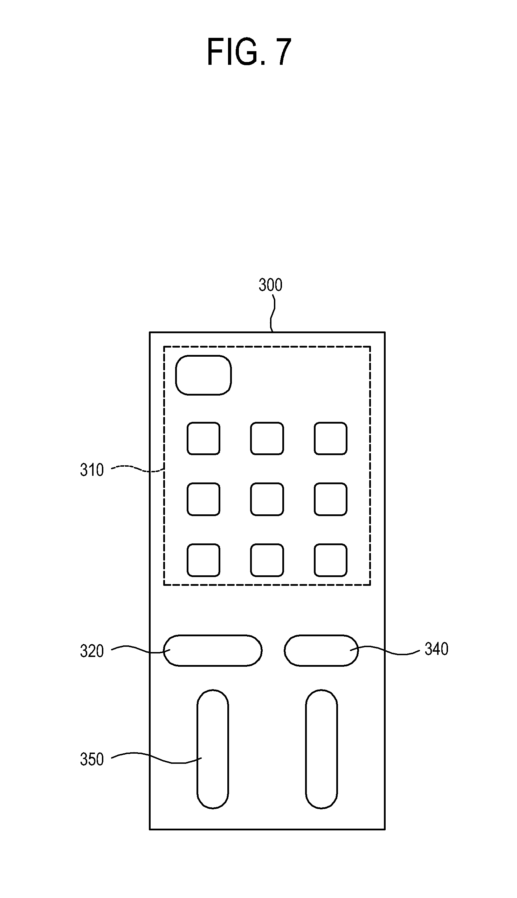

As shown in FIG. 7, as another example, a toggle button 340 may be provided to select a multi-view device. If a user presses the toggle button 340, a subject of a screen control is changed between the first multi-view device 210 and the second multi-view device 220, and the controller 150 may display information of the currently-selected multi-view device on the display 130.

According to the foregoing exemplary embodiment, a plurality of users may utilize one user input unit 300 to efficiently select a desired image and display mode.

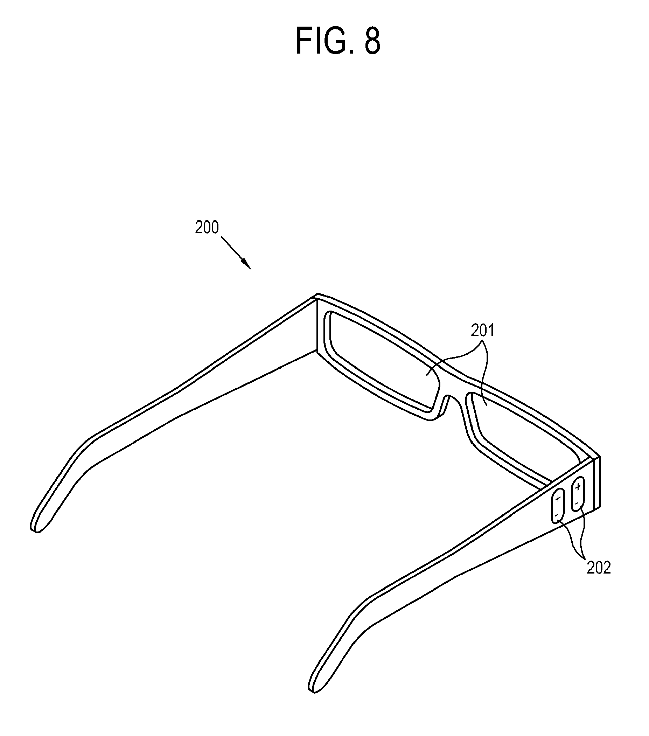

According to another exemplary embodiment, as shown in FIG. 8, the user input unit 300 may be included in a multi-view device 200. As shown therein, the user input unit may be provided as one or more buttons in a temple area 202 of an arm connected to the lens in the multi-view device 200. Otherwise, the user input unit may be formed in the middle of a temple area of the arm, or at an opposite end of the area of the arm connected to the lens, or in a circumference of the lens 201 and other places.

If a user's command is input from the user input unit 300 included in the multi-view device 200 through the communication unit 140, the controller 150 manipulates the screen corresponding to the multi-view device 200 which has transmitted the command. For example, if a user of the first multi-view device 210 changes a channel, only the channel corresponding to the first multi-view device 210 is changed, and there is no impact on the screen displayed by the second multi-view device 220.

The display apparatus 100 according to the present exemplary embodiment may provide a UI to efficiently control images corresponding to users if the multi-view function is performed.

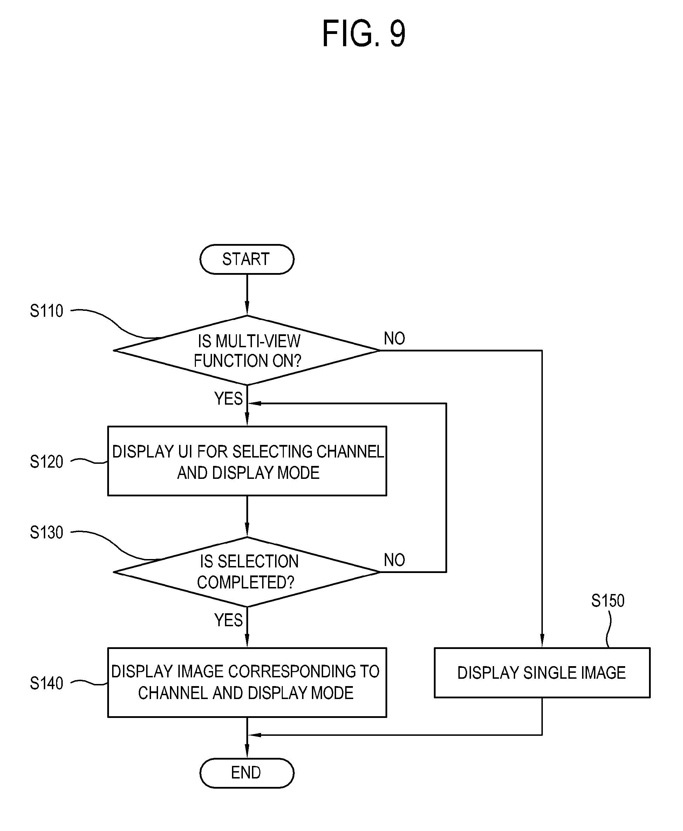

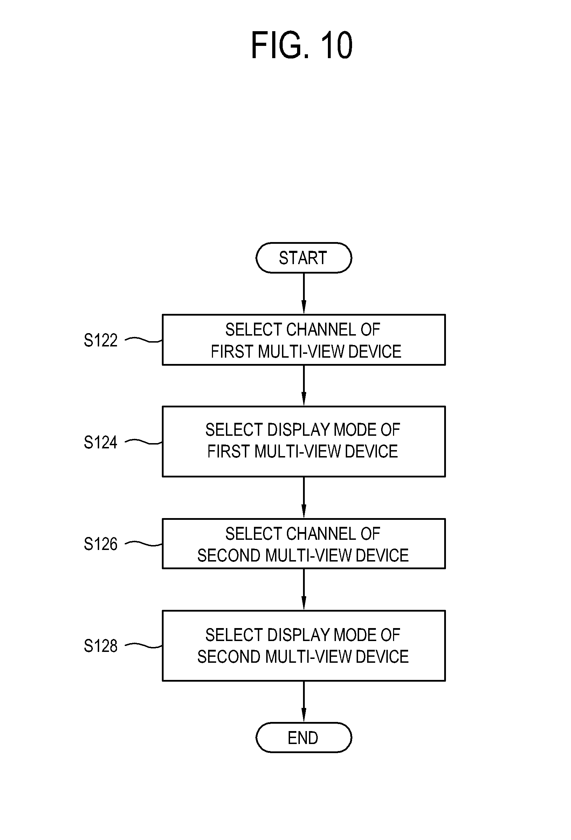

FIGS. 9 and 10 are flowcharts of a mode selection method of the display apparatus 100 according to an exemplary embodiment.

The display apparatus 100 may be implemented as a digital television (DTV) which includes a display to display an image and a UI and a communication unit to communicate with the multi-view device and perform the multi-view function. The multi-view device may include a left eye shutter lens and a right eye shutter lens, which selectively transmit light by opening and closing lenses in sync with a displayed screen to display a multi-view image and a 3D image.

The display apparatus 100 receives a user's command for setting the multi-view function.

If the multi-view function is executed (operation S110), the UI is displayed to select the channel and display mode corresponding to at least one multi-view device (operation S120). As described above, the displayed UI includes a sub UI for selecting a channel which will be viewed through the multi-view devices, and a sub UI for selecting the 2D or 3D display mode corresponding to the selected channel. For example, as shown in FIG. 10, the sub UIs may be displayed in the order of selecting the first multi-view device 210 (operation S122), selecting a display mode of the first multi-view device 210 (operation S124), selecting the channel of the second multi-view device 220 (operation S126) and selecting the display mode of the second multi-view device 220 (operation S128). However, the order and the type of the displayed UI is not limited to the foregoing.

If a user completes the selection of the channel and display mode through the UI (operation S130), the image is displayed on the basis of the channel and display mode (operation S140). While the image is displayed, the sync signal is transmitted to the multi-view device through the communication unit to synchronize the displayed screen and the opening and closing operations of the left and right eye shutter lenses, and the multi-view device opens and closes the left and right eye shutter lenses based on the received sync signal.

If the multi-view device communicates with the communication unit 140 through Bluetooth technology, upon setting of the multi-view function, the display apparatus 100 searches and displays on the display the multi-view devices which pair with the display apparatus 100, and upon selection of a particular multi-view device by a user from the searched multi-view devices, the display apparatus 100 displays the multi-view through the selected multi-view device and displays a UI for selecting the channel and display mode corresponding to the selected multi-view device.

The display apparatus 100 according to the present exemplary embodiment may further include a user input unit to receive a user's command. The user input unit may be provided as a remote control device separately from the display apparatus 100 or provided in an external surface of the display apparatus 100. The user input unit may include a plurality of buttons to select the displayed UI, and the type of the user input unit has been explained with reference to FIGS. 3 and 4.

The operation of receiving the command regarding the selection of the channel and display mode from the user input unit may include an operation of receiving a command regarding the selection of one of the multi-view devices and an operation of manipulating the screen corresponding to the selected multi-view device based on a user's command. The user input unit may include a button to select one of the multi-view devices. The mode selection method may further include an operation of selecting the multi-view device through the button, i.e., an operation of displaying information regarding the selection of the multi-view device on the display 130.

Unlike what has been explained above, the user input unit may be provided in the multi-view device. In this case, if a user's command is input by the user input unit of the multi-view device, only the screen corresponding to the multi-view device which has transmitted the command is manipulated and there is no impact on the screen corresponding to other multi-view devices.

As described above, the exemplary embodiment may provide a user interface for efficiently controlling images corresponding to respective users if a multi-view function is performed by a display apparatus.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an image receiver which receives an image signal of at least one channel;
an image processor which processes the received image signal;
a display which displays an image thereon based on the processed image signal;
a communication unit which communicates with at least one multi-view device which is synchronized with the displayed image; and
a controller which controls the display to display thereon a user interface (UI) to select a channel and a display mode which correspond to the at least one multi-view device, and
controls the image processor to display an image based on the selected channel and the selected display mode if a command regarding the selection of the channel and the display mode through the UI is input.

2. The display apparatus according to claim 1, wherein the display mode comprises at least one of a two-dimensional (2D) display mode and a three-dimensional (3D) display mode.

3. The display apparatus according to claim 1, further comprising a user input unit which comprises a plurality of buttons to select the UI, and through which the command is input.

4. The display apparatus according to claim 3, wherein if one of the multi-view devices is selected through the user input unit, the controller controls to manipulate a screen corresponding to the selected multi-view device based on a command input through the user input unit.

5. The display apparatus according to claim 4, wherein the user input unit comprises a button to select one of the multi-view devices, and the controller controls the display to display thereon information regarding the selection of the at least one multi-view device.

6. The display apparatus according to claim 1, wherein the multi-view device comprises a user input unit through which a command is input, and upon receiving the command from the user input unit of the multi-view device, the controller manipulates a screen corresponding to the multi-view device which transmitted the command.

7. The display apparatus according to claim 1, wherein if a multi-view function is set, the controller searches for, and displays on the display, multi-view devices which pair with the display apparatus, and controls the display to display thereon the UI to select the channel and the display mode of the at least one multi-view device selected from the searched multi-view devices.

8. The display apparatus according to claim 1, wherein the at least one multi-view device comprises a left eye shutter lens and a right eye shutter lens, and the controller transmits a sync signal to the at least one multi-view device through the communication unit to synchronize a screen displayed which corresponds to the selected channel and the selected display mode selected through the UI, and opening and closing operations of the left and right eye shutter lenses of the multi-view device, and the multi-view device opens and closes the left and right eye shutter lenses based on the sync signal.

9. A mode selection method of a display apparatus which displays an image and a user interface (UI) and communicates with at least one multi-view device which is synchronized with the image, the method comprising:
receiving a command to set a multi-view function;
displaying a UI for selecting a channel and a display mode corresponding to the at least one multi-view device;
receiving a command regarding selection of the channel and selection of the display mode through the UI; and
displaying an image based on the selected channel and the selected display mode.

10. The method according to claim 9, wherein the display mode comprises at least one of a two-dimensional (2D) display mode and a three-dimensional (3D) display mode.

11. The method according to claim 9, wherein the display apparatus further comprises a user input unit which comprises a plurality of buttons to select the UI and through which a command is input.

12. The method according to claim 11, wherein the receiving the command regarding the selection of the channel and the selection of the display mode from the user input unit comprises receiving a command regarding a selection of one of the multi-view devices, further comprising:
manipulating a screen corresponding to the selected multi-view device based on the command regarding the selection of one of the multi-view devices.

13. The method according to claim 12, wherein the user input unit comprises at least one button to select one of the multi-view devices,
the method further comprising:
displaying information regarding the selection of the at least one multi-view device.

14. The method according to claim 9, wherein the multi-view device comprises a user input unit through which a command is input,
the method further comprising:
receiving the command from the user input unit of the multi-view device; and
manipulating a screen corresponding to the multi-view device which transmitted the command.

15. The method according to claim 9, further comprising searching for, and displaying multi-view devices which pair with the display apparatus, wherein the displaying the UI comprises displaying the UI for selecting the channel and the display mode of the at least one multi-view device selected by a user from the searched multi-view devices.
